# EUROPEAN PATENT APPLICATION

(11) **EP 1 607 687 A2**
(43) Date of publication of application: **21.12.2005**
(21) Application number: 05253460.9
(22) Date of filing: 04.06.2005
(51) Int. Cl.: F24D 12/02

(54) **Improvements in and relating to heating systems and water heating apparatus for such systems**

(30) Priority: 08.04.2005 GB 0507137; 19.06.2004 GB 0413777; 26.11.2004 GB 0425998
(71) Applicant: Robertson, Alastair, 22130 Corseul (FR)
(72) Inventor: Robertson, Alastair, 22130 Corseul (FR)
(74) Representative: Nash, Keith Wilfrid

(57) **Abstract**

A method of heating a building in which a boiler provides hot water for circulating through radiators in the building and a condensing heat exchanger recovers heat from the boiler flue gases. Air entering the building is heated by an additional heat exchanger through which water flows which has been heated by the condensing heat exchanger. Cold air supplied to the combustion chamber is also employed to cool the flue gases. The condensing heat exchanger comprises a first exchanger in which the hot flue gases are cooled to a temperature above the dew point and a second in which the previously cooled flue gases are cooled to below the dew point. The second exchanger includes a primary water circuit which cools water in a secondary circuit, in which water is in contact with the flue gases and the secondary circuit water passes through a heat exchanger in an air inlet to the building. Some of the water returning from the radiators is cooled before supply to the primary circuit. A building and heating system comprises a boiler which provides a source of hot water, a pump for circulating the hot water through radiators in the building, a condensing heat exchanger which recovers heat from the boiler flue gases, and in which water which has been heated in the condensing heat exchanger is employed to heat air entering the building.

## Description

### Field of invention

This invention concerns heating systems of the type comprising a water heating apparatus (commonly called a boiler) to provide a source of hot water for circulating through radiators in a building to be heated and a secondary heat exchange apparatus for recovering heat from the products of combustion from such apparatus. The combination of water heating apparatus and secondary heat exchange apparatus is called a condensing boiler if the heat exchange apparatus removes latent heat of evaporation from water vapour in the products of combustion, and the present invention is applicable to condensing boilers.

The invention also concerns methods of operating condensing boilers and heating systems for buildings containing such boilers and to secondary heat exchange apparatus for use in such condensing boilers.

The fuel to be burnt to heat water in the boiler may be gaseous such as natural gas or even hydrogen, or in the case of oil/paraffin/kerosines may be a liquid. However the invention is not limited to the use of any particular fuel and is applicable to boilers which burn any fuel.

### Background to the invention

As indicated a condensing boiler system will cause the steam of combustion of a fuel to condense to liquid water and will also collect the latent heat of vaporisation of the steam and recycle this heat into the boiler system and thus increase the thermal efficiency of the boiler system.

Thus it has previously been proposed to recover heat from the flue gases of a water boiler in earlier UK Patent Specification No. 2382403, using a secondary heat exchanger, which raised the gross efficiency of a boiler from about 89.5 % to about 92.5 %.

The following points have been noted in relation to water boilers:-
1. The flue gas temperature from a boiler without a condensing secondary exchanger is well above 100°C, typically in the range 150°-250°C, and it is quite certain that such a boiler recovers no latent heat from steam because the flue gas temperature is too high for any condensation to take place. If then, such a boiler operates with a gross efficiency of nearly 90 % , then it is possible to conclude that all the steam latent heat is still trapped in the flue gases effluent from the boiler, and will escape up the flue.
2. The same boiler, fitted with a stainless steel (or other suitable metal) secondary heat exchanger as previously proposed, will demonstrably operate with a gross efficiency of about 93 %, an efficiency gain of just 3 %. This secondary exchanger, although fitted with a water condensate overflow tube, has been found to provide only a litre or so of water over an operating time of several hours. Therefore the secondary exchanger (condenser) described, although condensing some water and therefore correctly termed a condensing heat exchanger, is only condensing a small proportion of the steam, and a proper description would be a partially condensing heat exchanger because in no way is the volume of water collected representative of the volume of steam generated by the burning fuel, but is only a fraction thereof.
3. As confirmation of (2) above, large quantities of steam can be seen issuing to atmosphere from the secondary exchanger previously proposed, and this shows that at any rate some steam escapes the secondary exchanger and latent heat escapes with the steam.
4. In a typical example of a kerosene based fuel, the percentage of hydrogen in the fuel by weight is about 13.74%. Thus it can be shown that burning 1 US gallon per hour of the fuel will produce 3.6 kilograms of water as steam per hour. Moreover, the specific latent heat of steam at 100°C is 2.26 megajoules per kilogram, or almost 6 % of the total calorific value of the fuel, and so far only a fraction of this has been recovered by secondary heat exchangers as proposed. For total latent heat recovery to take place, it follows that about 3.6 kilograms of water could (and should) be recovered. In practice perhaps as little as 10 % is actually recovered. Therefore although a 3 % efficiency gain has been achieved, the principal amount of energy recovered by the previously proposed secondary heat exchanger is due to reducing the temperature of boiler exhaust gases. The bulk of the steam and its energy escapes to atmosphere, as evidenced by the small volume of condensed water collected
5. The dew point of the water vapour component in the flue gas of a typical domestic boiler is about 50°-55°C and can be lower. It is quite impossible to fully condense this water and to capture the energy of condensation unless the medium used to cool the gases is below, and ideally considerably below, the dew point. The temperature of the return water from the radiators previously proposed to cool the flue gases is at about 60°C, and therefore is unavailable to cool the flue gases below the dew point.
6. It is possible to reduce the water flow through the radiators so that the return temperature is sufficiently low (e.g. 25°-30°C). This would allow the returning water to be employed in the heat exchanger to effect full condensation of the water vapour in the still hot gases, but in practice the very low flow rate through the radiators is not feasible.

In the case of combustion of north sea gas, (natural gas) the latent heat in the steam content of the exhaust gases can account for approximately 10% of total combustion energy.

In the case of liquefied gases such as butane and propane, the latent heat in the steam content of the exhaust gases can account for about 8 % of total combustion energy.

In the case of lighter fuel oils, such as Kerosene and Gas Oil, the latent heat in the steam content of the exhaust gases can account for about 6 % of total combustion energy.

These figures are based on typical content of hydrogen of the fuels. The latent heat can be taken to be proportional to the hydrogen content of the original fuel since the latent heat in the exhaust gases will be equal to the heat required to vaporise the water which results when the hydrogen component is burnt in air.

### Object of the invention

It is an object of the present invention to provide further improvements to the condensing boiler and associated heating system described in UK Patent Specification 2382403 so as to provide a more efficient method and apparatus for recovering the latent heat in the water vapour present in the flue gases, and an improved condensing heat exchanger for such a boiler, and an improved method of heating a building using such a boiler.

### Summary of the invention

According to the present invention, a method of heating a building in which a water heating boiler provides a source of hot water for circulating through radiators in the building and a secondary condensing heat exchange means operates to recover heat from the products of combustion from the boiler, and in which there is an air inlet to the building comprising the step of warming air entering the building by a heat exchanger in the air inlet through which water is caused to flow and reheating the water in the secondary heat exchange means using heat from the hot products of combustion, thereby to transfer heat therefrom to air entering the building.

Preferably the secondary heat exchange means operates to lower the temperature of the products of combustion below the dew point of water vapour therein thereby to gain the latent heat of evaporation of the water content of the products of combustion.

The air inlet to the building may also comprise an air intake for supplying air to the combustion chamber of the boiler, so that after passing through or around the heat exchanger some of the warmed air goes to the combustion chamber in the boiler to support combustion and the remainder of the warmed air is diverted into the building, to directly warm the latter.

Alternatively the air inlet to the boiler combustion chamber may be separate from the air inlet to the building and a heat exchanger may be associated with each of the air inlets and in use heated water is caused to flow through both heat exchangers. Both may be heated by the same re-heated water.

Fan means may be employed to control the flow of air into the air inlet to the building, and where the combustion air inlet is separate therefrom, a separate fan may be employed to control the flow of air for combustion in the boiler.

Where fan means is provided to control the inflow of air into the building and/or for combustion in the boiler, the fan speed may be adjustable to increase and decrease the airflow.

In a preferred arrangement the secondary condensing heat exchange means comprises two separate heat exchangers a first in which the flue gases are cooled by water flowing therethrough to a temperature which is above the dew point temperature and a second through which the previously cooled flue gases pass and in which they are cooled to below the dew point temperature before escaping to atmosphere, and in which the second heat exchanger includes primary and secondary water circuits, water flowing around the secondary circuit being cooled by water flowing through the primary circuit, the secondary circuit water being in contact with the flue gases to cool them below the dew point, and water from the secondary circuit is caused to pass through the heat exchanger in the air inlet, to cool the secondary circuit water and warm the incoming air, before being returned to rejoin the water flowing around the secondary circuit.

In a preferred arrangement water which is to flow through the primary circuit is obtained by diverting some of the water returning from the radiators in the building to the boiler, and this diverted water is cooled by flowing through at least one further heat exchanger before being supplied to an inlet to the primary circuit.

The rate of flow of water diverted as aforesaid in a typical domestic heating system incorporating an 80,000BThU boiler typically will be in the range 0.5 to 1.0 litres per minute, but the invention is not limited to such a flow rate.

The said at least one further heat exchanger may comprise a radiator located within a region of the building which is maintained at a temperature which is lower than that of other regions of the building and if that is the only device for cooling the diverted water, the region of the building will need to be below the dew point temperature.

Where the building includes a reservoir of cold water for supplying water to a heated water cylinder which is to supply hot water to taps in the building, a further heat exchanger may be provided comprising for example a coil of tubing associated with the cold water reservoir, through which the diverted water may be caused to flow before it is supplied to the inlet to the said primary circuit. Again if this is the only device for cooling the diverted water, the cold water temperature needs to be below the dew point temperature.

The further heat exchanger linked to the cold water reservoir is preferably one in which the two water paths are essentially parallel and the flow of water to be warmed along one path is in the opposite direction to the flow of water which is to do the warming along the other path.

Such a heat exchanger is called a contra flow heat exchanger.

In a preferred arrangement the further heat exchanger comprises two lengths of copper tube one inside the other and defining an annular water path between the two tubes which is closed at each end and includes a water inlet to inner tube at one end and a water outlet at the other end and likewise a water inlet to the annular water path near the outlet from the inner tube and an outlet from the annular path near the inlet to the inner tube, with pipe connections for supplying the diverted water to the inlet and retrieving diverted water from the outlet of the annular path, and a pump for circulating water from the reservoir through the inner pipe to re-enter the reservoir as it exits from the inner tube outlet, thereby to create a contra flow heat exchanger in which the two water paths which are essentially parallel so that in use the flow of water to be warmed along one path is opposite to the direction of the flow of water which is to do the warming and which flows along the other path.

Where both further heat exchangers are to be used to cool the diverted water, preferably the diverted water is caused to flow first through the radiator and thereafter through the heat exchanger associated with the cold water reservoir.

The diverted water returning from the radiators in the building may instead or in addition be forced to pass through a heat exchanger in an air inlet to the combustion chamber, to be cooled thereby to a temperature in the range 0° - 10°, and typically to a temperature of the order of 8°C. Again it is preferable for the incoming air to be below the dew point temperature.

Preferably a pump is provided to pump secondary circuit water through the second heat exchanger and through the air inlet heat exchanger.

Preferably only some of the secondary circuit water is circulated through the air inlet heat exchanger before it returns to the secondary circuit, and the remainder of the secondary circuit water is simply circulated around the secondary circuit by the pump.

In the preferred arrangement water in the secondary circuit is pumped to an elevated position and thereafter caused to flow in a downward sense as a cascade, preferably over and around a plurality of baffles, and hot flue gases are caused to pass in an upward sense through the cascade in direct contact with the water so that any water that is condensed from the hot gases and any water-soluble products of combustion can mix with the cascading water so as to be drained off.

Due to the addition of the condensed water to the water circulating in the secondary circuit the volume of water in the secondary circuit will increase, and overflow means is preferably provided to draw off the excess volume.

A pump may be provided to pump water in the secondary water circuit from a region in which it is cooled by water flowing through the primary circuit, to a spray means, to form the cascade, which pump is separate from the pump which pumps secondary circuit water through the air inlet heat exchanger.

Alternatively one pump may be employed to pump secondary circuit water.

Since water soluble products of combustion leave the gases and mix with the water cascade, these products of combustion are removed from the flue gases.

In the preferred arrangement, the water and gases are separated by gravity.

Where the incoming air is below 20°C and the air inlet heat exchanger is supplied with water from the secondary circuit of the second heat exchanger, which is at a temperature in the range 20° to 30°C, the incoming air will be warmed, and the secondary circuit water will thereby be cooled before it is returned to the second heat exchanger.

An overall control system may be provided, together with temperature sensors and/or flow sensors and electrically controlled valves for adjusting the volume and/or rate of the flow any diverted water associated with the secondary or the primary circuits. In the case of some installations (such a control may include or comprise a digital computer) and this is particularly the case for larger installations.

Likewise where diverted water is to flow through two or more heat exchange means the control system may be programmed to determine through which of the heat exchangers the water is to flow.

A pump is normally employed to circulate the heated water from the boiler to the radiators and the flow induced by such a pump may be sufficient to cause the diverted returning water to flow through the said further heat exchanger or heat exchangers and primary circuit. Where this is not the case and/or greater control over the flow rate of the diverted returning water is required, a further pump may be provided for pumping the diverted water through the said further heat exchanger or heat exchangers and through the primary circuit.

If incorporated, a control system may control the operation and speed of the or each pump (to control water flow) and/or the speed of operation of any fan in any air inlet.

Where the air inlet to the boiler combustion chamber is separate from the air inlet to the building, a heat exchanger may be located in an air duct leading to the combustion chamber and first valve means may be provided downstream of that heat exchanger for controlling the flow of air through the air duct to the combustion chamber, and a bypass may be provided between an opening in a wall of the air duct upstream of the heat exchanger to an opening in the air duct wall downstream thereof, through which some or all of the incoming air can pass directly to the combustion chamber.

Second valve means may be provided to control the flow of air through the bypass.

The first and second valve means may be preset on installation or may be controlled by a subsidiary control system, which may be part of the overall control system or may be separate therefrom. The subsidiary control system may also be responsive to signals from sensors for sensing air temperature and/or water temperature and/or air flow and/or water flow rates and may also control fan speeds and pump speeds.

Pipes interconnecting heat exchangers for cooling the diverted water and for conveying the cooled diverted water to the secondary heat exchange means are preferably lagged or otherwise insulated, especially where the pipe run(s) is/are significant (as may be the case if a reservoir of cold water is in a roof space of a house and the boiler and secondary heat exchange means are on the ground floor or in a basement of the building).

In one embodiment of the preferred arrangement, the secondary heat exchange means comprises a closed housing divided internally into two compartments, an upper compartment containing a first coiled tube heat exchanger, a flue gas inlet at its upper end, and a flue gas outlet at its lower end, and a lower compartment having upper and lower regions, a second coiled tube heat exchanger forming the said primary circuit in the lower region with water inlet and outlet connections at opposite ends of the coil, and a plurality of baffles defining a tortuous path between the top and bottom of the upper region of the lower compartment, duct means communicating between the flue gas outlet of the upper compartment and a flue gas inlet to the upper region of the lower compartment for conveying flue gases between the two compartments, a flue gas outlet conveying flue gases from the upper region of the lower compartment to atmosphere, pipe means for conveying water from a water outlet at the bottom of the lower region of the lower compartment to an inlet to a water spray means at or near the top of the upper region of the lower compartment, so that in use, water cascading downwardly over the baffles in contact with upwardly moving flue gases following the tortuous upward path in the said upper region of the lower compartment comprising the said secondary circuit, and further pipe means for conveying water from an outlet of the coiled tube in the lower region of the lower compartment to an inlet of the first coiled tube in the upper compartment so that in use the water flowing through the coiled tube in the upper compartment is warmed before it leaves the secondary heat exchange means to return to the boiler.

Alternatively the hot gases can be supplied to the top of the said upper region so as to flow downwardly with the cascade and exit at the bottom.

The invention also lies in a central heating boiler in combination with secondary condensing heat exchange means as proposed herein, when forming part of a heating system for a building, as aforesaid.

The invention therefore also lies in a building when heated by a heating system as aforesaid, and which can be thought of as a large heat sink to which heat is supplied from the combustion process by means of at least one of a plurality of different heat exchange processes involving the steps of, heating air entering the building, heating water which is supplied to radiator heat exchangers in the building, warming cold water stored in the building, and gaining heat from hot gaseous products of combustion by cooling them to a temperature below the dew point of water vapour therein before being exhausted to atmosphere, the heat thereby given up by the hot products of combustion and the latent heat of vaporisation of their water content also being employed to heat water and/or air employed in heating the building.

The invention provides a heating system for a building in which heat is exchanged between low temperature diverted water, and water circulating around a generally closed circuit, to cool the latter to well below the dew point temperature, to achieve condensation of the hot exhaust gas water vapour content, and subsequently warming the diverted water flow before it is to return to the main heat exchanger in the boiler so that the return water flow to the boiler from the radiators is not cooled by the mixing therewith of water the secondary condensing heat exchange means associated with the boiler.

The coiled tube heat exchanger in the upper compartment may be stainless steel for an oil fired boiler, or aluminium for a gas fired boiler.

Typically the diverted water flow entering the coiled tube heat exchanger in the upper compartment is at a temperature of the order of 30°C and is heated by the hot gases to a temperature of the order of 60 to 70°C before it is returned to the boiler.

The boiler is typically fitted within a casing, and the secondary heat exchange means may also be fitted within a casing which may be separate from but adjacent, to or located within the boiler casing.

Alternatively the secondary heat exchange means and boiler may be mounted within a single casing.

One method of cooling the products of combustion (flue gases) of a fossil (e.g. hydrocarbon based) fuel burning water heating apparatus (a boiler) which in use heats water for circulation by a pump around a closed circuit containing radiators and a main heat exchanger by which it is heated by the burning of the fossil fuel in air in a burner in the boiler, involves passing the flue gases pass through secondary heat exchange means by which they are cooled below the dew point temperature of water vapour in the flue gases so that the water condenses and is thereby separated from the flue gases, in which a portion of the circulating water is diverted from the main flow just prior to its return to the main heat exchanger and the diverted flow is cooled by further heat exchange means to a temperature substantially below the dew point temperature. The cooled water is employed in the condensing heat exchange step in the secondary heat exchange means to cool the flue gases below the said dew point, and a further heat exchange step is provided in the secondary heat exchange means between the flue gases and the diverted flow after the condensing heat exchange step, to heat up the diverted water before it returns to the main (boiler) heat exchanger.

The further heat exchange step conveniently also serves as a first step of cooling the flue gases in the secondary heat exchange means.

In one arrangement the air intake to the burner combustion chamber includes a heat exchanger for warming the incoming air and cooling the diverted water flow.

Where the secondary heat exchange means has its own casing it may be located in a second outer casing spaced from the first inner casing containing the secondary heat exchange means, and the air required to support combustion in the boiler burner may be forced to flow to the latter via the space between the inner and outer casings.

Preferably the heat exchanger provided to warm incoming air to support combustion is located upstream of the path between the inner and outer casings of the secondary heat exchange means, so that the temperature of the incoming air is at its lowest for cooling the diverted water flow.

To this end a heating system for a building comprises a water heating apparatus (boiler) as aforesaid which includes a burner for burning a hydrocarbon fuel such as gas or oil in a combustion chamber, and radiators supplied with hot water therefrom, are all located in the building, wherein the heat recovery system comprises secondary heat exchange means as aforesaid, and comprises a heat recovery system by which heat which would normally be lost in the exhaust flue gases leaving the boiler is recovered. In such a system some of the water returning from the radiators is diverted from the return path to the boiler and is cooled below the dew point of water vapour in the flue gases from the combustion compartment of the boiler, and thereafter caused to flow through the secondary heat exchange means to cool the gases to recover the latent heat of vaporisation from the water vapour therein.

Where a further heat exchanger is provided in the air intake to the combustion chamber in the boiler, the air intake may include a fan to control the inflow of air. Cold air drawn or forced into the combustion chamber to maintain combustion, has to pass through or around this further heat exchanger through which the diverted water is caused to flow, to cool the latter and in so doing warm the air before it passes into the combustion chamber.

The invention will now be described by way of example with reference to the accompanying drawings in which:-
Fig 1A and 1B comprise a diagrammatic flow diagram of a boiler and secondary heat exchanger in a radiator heating system embodying the invention,
Fig 2 is a diagrammatic cross section through a twin casing secondary heat exchanger,
Fig 3 is a diagrammatic view of a cold water reservoir and an external contra-flow heat exchanger which differs from that shown in Fig 1A, and
Fig 4 is a diagrammatic view of an alternative cold water reservoir which employs an internal contra flow heat exchanger.

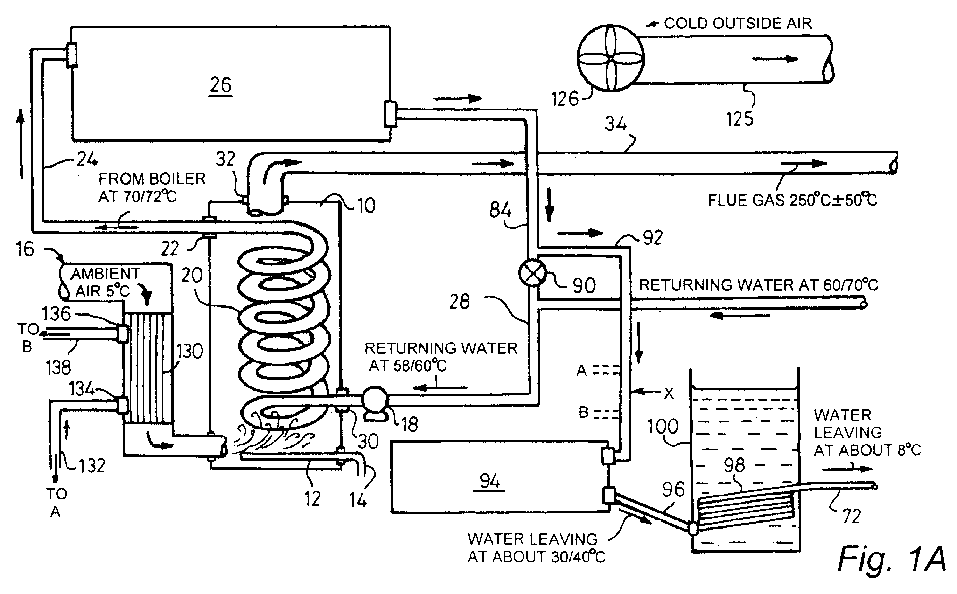

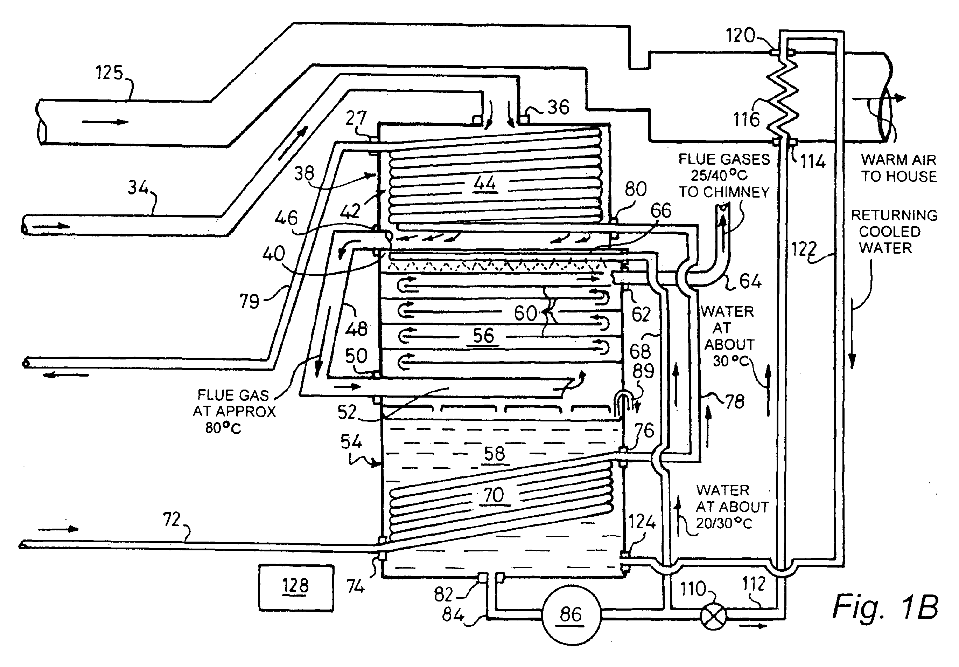

In Fig 1 a typical domestic boiler 10 is shown having a burner 12 in combustion chamber supplied with fuel by a fuel supply pipe 14, and from an air intake 16. The boiler includes a pump 18 and a main heat exchanger 20 through which water in use is circulated by the pump 18. The water is heated by the hot product of combustion rising from the burning fuel.

Hot water leaves the main heat exchanger 20 via hot water outlet 22 and pipe 24, and after circulating through radiators 26 the water is returned via pipe 28 to an inlet 30.

The hot gases leave the upper end of the boiler casing through outlet 32, and via duct 34 pass to the flue gas inlet 36 at the upper end of a secondary composite heat exchange device, the casing for which is generally designated 38.

The casing 38 is divided internally by a wall 40 and in the upper compartment 42 is located a coiled tube 44 around which the gases entering at 36 flow downwardly through the compartment to exit via outlet 46 and pipe 48, so as to pass via an inlet 50 into a manifold 52 located approximately midway up the lower part 54 of the casing 38 below the wall 40.

Water flows through the coiled tube 44 as will be described later, to cool the hot gases as they migrate through upper compartment 42, and the water in turn is heated.

The lower compartment 54 includes upper and lower regions 56, 58 separated by the manifold 52 into which the gases pass from duct 48, and from which the gases leave in a generally upward direction.

In the upper region 56 is an array of spaced apart baffle plates 60 which force the gases to follow a tortuous path as they rise upwardly through the region 56 to exit via outlet 62 and pass via duct 64 to a flue or chimney (not shown).

Just below the wall 40 is a spray bar assembly 66 to which cold water is supplied via a pipe 68. Water leaving the spray bar 66 forms a cascade of water over the baffles 60 which travels down the region 56 in the opposite sense to the hot gases rising up therethrough, so as to mix with, and cool the gases.

After reaching the bottom of the region 56 containing the baffles 60,the water drains down into the lower region 58 which contains a coiled tube 70. In use water is supplied via pipe 72 to an inlet 74 to the tube 70 and flows through the tube 70 through an outlet 76 to a pipe 78. The latter conveys water to an inlet 80 to the coiled tube 44 in the upper region 42, so that after traversing the lower coil 70 water passes through the upper coil 44 in the upper region 42, and leaves via outlet 77 and pipe 79 to return to pipe 28 and thereby via pump 18 to the heat exchanger 20 in the boiler 10.

An outlet 82 at the bottom of the lower region 58 allows water which has collected in the lower region to pass via a pipe 84 to a pump 86 to be pumped via pipe 68 to the spray bar 66. The lower region 58 can be thought of as a reservoir.

As water vapour in the hot gases condenses, this also drains into the water in the lower region and this will raise the level of the water in the reservoir 58. An overflow 89 preferably including a siphon, prevents the level of water in 58 exceeding a design level, and allows excess water to be drained off.

A valve 90 is positioned in the return feed pipe 28 upstream of where pipe 79 enters pipe 28. If partially closed, valve 90 will create a back pressure upstream of the valve. A bleed pipe 92 communicates with the pipe 28 upstream of valve 90 and depending on the setting of the valve, more or less water will be diverted from 28 into 92.

Pipe 92 feeds a radiator 94 located in a cool part of the building (not shown).

Water from 94 flows along a pipe 96 to a coil 98 in a cold water tank 100 usually located in the roof space of a building, which is supplied with cold water from a water main (not shown) for supplying water to a hot water cylinder (not shown) to be heated either by an immersion heater or by a heat exchanger in parallel with the radiators (or both). After passing through the coil 98 the water will be cooled and the now cooled water flows via pipe 72 to the inlet 74 to the coil 70.

Further cooling is achieved by diverting some of the water from pump 86 via a valve 110 and pipe 112 to an inlet 114 to the heat exchanger 116 located in an air duct 118 which serves as an air inlet to the building (not shown). Water from the heat exchanger 116 passes via outlet 120 and pipe 122 to a low level inlet 124 to the water reservoir 58.

The air flow into and through the duct 125 may be fan assisted as by a fan 126. On cold days in winter, the incoming air temperature in the UK could be below 0°C thereby causing a significant cooling of the water flowing through 116, but in turn the air is warmed perhaps to in excess of 20°C.

A control system may be provided as shown at 128 which receives signals from sensors (not shown) sensing air temperature, water temperature, air flow and water flow rates, to provide control signals for operating valves such as 90 and 110 and/or fan speeds and/or pump speeds.

Air required for combustion may instead or in addition be warmed by a heat exchanger 130 in the air duct 16. Water which is to pass though the heat exchanger 130 may be obtained by diverting water from pipe 92 along a pipe 132 to supply an inlet 134 to the heat exchanger 130. After traversing the latter the now cooled water leaves via outlet 136 to flow via pipe 138 to pipe 92 or pipe 96. A valve (not shown) may be included in the pipe 132 or 138 to control the flow rate through 130.

Where all the water in 92 is to flow through 130 before it passes to 94, the pipe 92 must be broken at X so that the diverted water in 92 is forced to flow along 132, through 130 and then via 138 to the inlet of radiator 94.

Where some of the water flow in 92 is to be diverted via 130, then a valve (not shown) may be inserted in pipe 92 downstream of the tapping (not shown) feeding pipe 132 and upstream of where pipe 138 joins the pipe 92 ahead of radiator 94. Adjusting the valve (not shown) allows more or less water to flow through 130.

Where 130 is to be in parallel with 94, then pipe 132 returns the water from 130 to pipe 96.

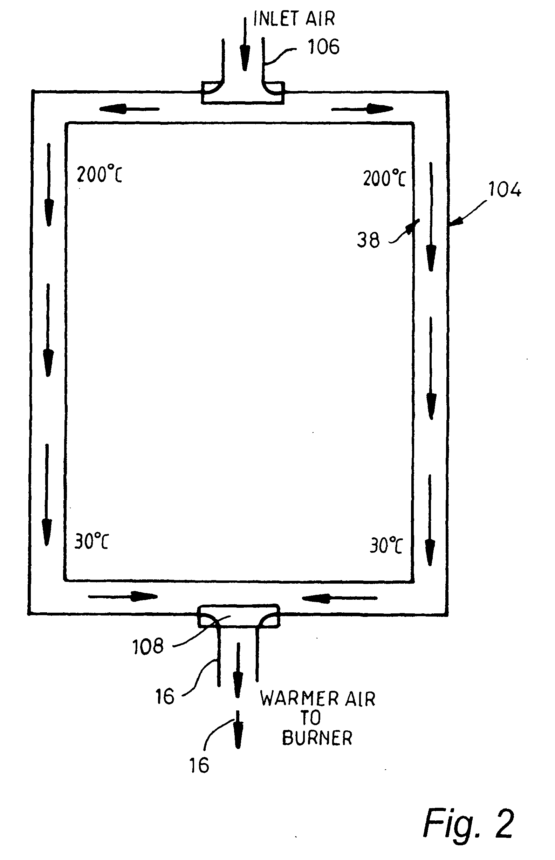

In order to warm the air supply for combustion of the fuel supplied to the burner 12, the air duct 16 may be supplied with air that has been warmed by being passed around the casing 38 of the secondary heat exchanger. This arrangement is shown in Figure 2 in which the casing 38 is shown housed within (but spaced from) an external housing 104. The latter creates a closed space around 38 having an air inlet 106 and outlet 108. The latter communicates with the inlet of duct 16. Heat from the casing 38 warms the air flowing between 106 and 108 thereby raising the temperature of the air to be employed in the combustion of the fuel by the burner 12.

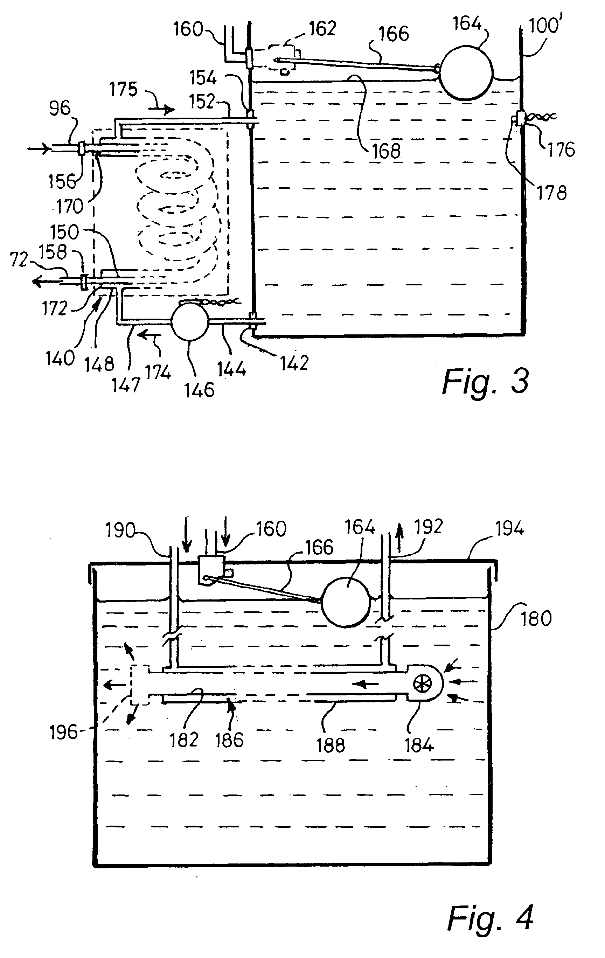

Fig 3 shows an alternative cold water reservoir 100' which can be used in place of that shown at 100 in Fig. 1A. In the alternative reservoir the heat exchanger is outside the tank 100' and is denoted by the dotted outline 140. Water is drawn from the tank 100' via outlet 142 and pipe 144 by a pump 146 to be a pumped through a pipe 147 to a sleeve 148. The latter surrounds, and is spaced from, an inner pipe 150, and serves to return water to the tank via a pipe 152 and inlet connection 154, after traversing the length of the sleeve.

Water to be cooled by the cold water passing through the sleeve 140 is obtained from pipe 96 (of Fig. 1A) which is connected to the pipe 150 at 156. After being cooled, it passes out of the pipe 150 via outlet connection 158 and enters pipe 72 (of Fig. 1A) to pass to coil 70 via the inlet connection 74.

Also shown in Fig. 3 is a cold water feed pipe 160 for supplying water to the tank 100', a valve 162 of conventional design which controls the inflow of water into the tank and a hollow ball 164 which floats on the water and is carried at the end of a hinged arm 166. This operates in known manner to close the valve 162 when the water level 168 in the tank raises the ball 164 to a predetermined height.

Power for operating the pump 146 is obtained from the control system 128, and although not shown, a warning device (which may be either audible or visual or both) is provided to indicate if the pump is failing to pump water around the sleeve 148.

Typically the pipe 150 is formed from copper or other good thermally conducting material. The outer sleeve may also be formed from copper or the like, or more preferably from a plastics material. In either event, but especially if formed from copper or the like, the outer sleeve is preferably encased in a thermally insulating jacket or enclosure as shown in dotted outline at 140.

As shown in Fig. 3 the sleeve 148 is closed at its two ends at 170, 172 and the smaller diameter pipe 150 extends in a sealing manner through the sleeve ends 170, 172 respectively.

For given diameters, the length of the pipe 150 and sleeve 148 will determine the area of the heat transfer surface and if the pipe is of the order of 5 - 10 mm diameter and the sleeve is in the range 10 - 20 mm diameter, then the length of the sleeve will probably need to be of the order of 5 to 6 metres. The actual length can be determined by experiment. For convenience the combination of sleeve and pipe are therefore coiled as shown in dotted outline in Fig. 3.

Although not shown, the pipe 144, pipe 147 and pipe 152 may also be encased in thermally insulating material, as may also the pump if desired. Alternatively some or all of these pipes and the pump may be situated within the enclosure 140 and thereby be insulated.

It is a preferred feature of the heat exchanger of Fig. 3 that the pump 146 operates to cause water to flow in the direction shown by the arrow 174 so that the water flow through the sleeve is opposite in direction to that through the pipe 150. This contra flow has been found to increase the transfer of heat by the device relative to what is obtained if the water flow in the sleeve and pipe are in the same direction. The water flow back to the tank 100' is denoted by arrow 175.

Also shown in Fig. 3 is a temperature sensitive switch 176 including a temperature sensor 178, which is connected to the control system 28 to shut off the supply of power to the pump 146 if the temperature of the water in 100' rises above the predetermined valve.

An alternative contra flow heat exchanger for placing inside the cold water tank is shown In Fig. 4.

Superficially the system is similar to that of Fig. 3 but there is one important difference.

Since the Fig. 4 exchanger is inside the tank the outer surface of the outer tube is in contact with the cold water and the device therefore has about 150 % more effective heat exchange surface.

In Fig. 4 water is pumped from the tank 180 into and along inner tube 184 by a submersible pump 184.

After traversing 180 the pumped water exits back into the water in the tank 180.

Water from the divert system is caused to pass along the annular passage 186 between inner pipe 182 and outer pipe 188, in the opposite direction.

The area of outer tube which is exposed to the tank water is proportional to the outer tube diameter, whereas the area effected by the pumped contra flow, is proportioned to the inner tube diameter. Typically the inner tube diameter is 8mm and the outer tube diameter is 12mm.

If the tubes 182, 188 are each 1 meter long, then the surface area of inner tube = 100 x 0.8 x 3.14 = 251.2 cm² and that of the outer tube = 100 x 1.2 x 3.14 = 376.8 cm².

This results in a total heat exchange area equal to 628 cm².

Typically the water in the inner tube 182 from the cold water in the tank will be at a temperature of the order of 8°C, and it moves along in the arrowed direction, cooling as it does so, the wall of the inner tube 182.

The diverted water which flows through the annular region 186, moves in the opposite direction, and is cooled by the water flowing through 182. However the outer tube 188 is also exposed to the cold tank water, so the divert water is cooled on one face by the contra flow of cold water in 182 and simultaneously gives up its energy quite efficiently to the cold water in the tank through the wall of outer tube 186.

If the annular gap is small, eg. of the order of 2 mm, there is only a small volume for the 0.5 - 1.00 litre per minute flow of the diverted water to occupy as it traverses the annular region 186..

In practice the pipes 182, 188 will need to be a few metres long, for example 5 metres, and can be accommodated in a domestic cold water tank by being coiled. The assembly may be attached to, and the flow and return pipes 190, 192 for the divert water can also extend through, a tank lid, such as shown at 194. In addition, the ball valve and cold water feed as described with reference to Fig. 3, may also be attached to the tank lid 194.

If after being coiled, the exit from the inner tube 182 is near the top of the water in the tank, a diffuser such as 196 is fitted over the exit to break up the flow and prevent turbulance.

## Claims

1. A method of heating a building in which a water heating boiler which in use burns a hydrocarbon fuel in a combustion chamber provides a source of hot water for circulating through radiators in the building and a secondary condensing heat exchange means operates to recover heat from hot gaseous products of combustion passing from the boiler to a flue, and in which there is an air inlet to the building, comprising the step of warming air entering the building by a heat exchanger in the air inlet through which water is caused to flow which in use is heated in the secondary heat exchange means using heat from the hot products of combustion, thereby to transfer heat therefrom to air entering the building.

2. A method as claimed in claim 1 wherein the secondary heat exchange means operates to lower the temperature of the products of combustion below the dew point of water vapour therein thereby to gain the latent heat of evaporation of the water content of the products of combustion, so that this heat is also available to heat the air entering the building.

3. A method as claimed in claim 1 or 2 wherein the air inlet to the building also comprises an air intake for supplying air to the combustion chamber of the boiler, so that after passing through or around the heat exchanger in the inlet some of the warmed air goes to the combustion chamber in the boiler to support combustion and the remainder of the warmed air is diverted into the building, to directly warm the latter, or the air inlet to the boiler combustion chamber is separate from the air inlet to the building and a heat exchanger is associated with each of the air inlets, and in use heated water is caused to flow through both heat exchangers.

4. A method as claimed in any of claims 1 to 3 wherein the secondary condensing heat exchange means comprises two separate heat exchangers, a first in which the hot flue gases are cooled by water flowing therethrough to a temperature which is above the dew point temperature and a second through which the previously cooled flue gases pass and in which they are cooled to below the dew point temperature before escaping to atmosphere, and in which the second heat exchanger includes primary and secondary water circuits, water flowing around the secondary circuit being cooled by water flowing through the primary circuit, the secondary circuit water being in contact with the flue gases to cool them below the dew point, and water from the secondary circuit is caused to pass through the heat exchanger in the air inlet, to cool the secondary circuit water and warm the incoming air, before being returned to rejoin the water flowing around the secondary circuit.

5. A method as claimed in claim 4 wherein water which is to flow through the primary circuit is obtained by diverting some of the water returning from the radiators in the building to the boiler, and this diverted water is cooled by flowing through at least one further heat exchanger before being supplied to an inlet to the primary circuit.

6. A method as claimed in claim 5 wherein the said at least one further heat exchanger comprises a radiator located within a cool region of the building.

7. A method as claimed in claim 5 wherein the building includes a reservoir of cold water for supplying water to a heated water cylinder which is to supply hot water to taps in the building, and a further heat exchanger is provided associated with the cold water reservoir, through which the diverted water is caused to flow before it is supplied to the inlet to the said primary circuit, to transfer heat from the diverted water to the water in the reservoir and thereby warm the latter and cool the former.

8. A method as claimed in claim 7 wherein the further heat exchanger comprises two lengths of tube of thermally conductive material, one inside the other, and defining an annular water path between the two tubes which is closed at each end and includes a water inlet to the inner tube at one end and a water outlet therefrom at the other end, and a water inlet is provided to the annular water path near the outlet from the inner tube and an outlet from the annular path is provided near the inlet to the inner tube, the diverted water is supplied to the inlet and retrieved from the outlet of the annular path, and water is pumped from the reservoir through the inner pipe to re-enter the reservoir as it exits from the inner tube outlet, thereby to create a contra flow heat exchanger in which the two water paths are essentially parallel, so that in use the flow of water to be warmed along one path is opposite to the direction of the flow of water which is to do the warming and which flows along the other path.

9. A method as claimed in claim 8 wherein the pump is a submersible pump and is located together with the contra flow heat exchanger within the reservoir, or the contra flow heat exchanger is located externally of the reservoir and in use water is pumped from the latter and through one of the parallel paths before it is returned to the reservoir.

10. A method as claimed in claim 5 wherein the diverted water is caused to flow first through a radiator as claimed in claim 6 and thereafter through a heat exchanger associated with a cold water reservoir as claimed in claim 7.

11. A method as claimed in any of claims 4 to 10 wherein a pump operates to pump secondary circuit water through the second heat exchanger and through the building air inlet heat exchanger, and only some of the secondary circuit water is circulated through the air inlet heat exchanger before it returns to the secondary circuit, and the remainder of the secondary circuit water is simply circulated around the secondary circuit by the pump.

12. A method as claimed in claim 11 wherein water in the secondary circuit is pumped to an elevated position and thereafter caused to flow in a downward sense as a cascade, and hot flue gases are caused to pass in either an upward sense through or in the same direction as the cascade in direct contact with the water so that any water that is condensed from the hot gases and any water-soluble products of combustion can mix with the cascading water so as to be drained off.

13. A method as claimed in any of claims 5 to 12 wherein an overall control system is provided, together with temperature sensors and/or flow sensors and electrically controlled valves whereby in use the volume and/or rate of flow of any diverted water associated with the secondary or the primary circuits is controlled.

14. A secondary heat exchange means for use in the method of any of claims 1 to 13 comprising a closed housing divided internally into two compartments, an upper compartment containing a first heat exchanger, a flue gas inlet at its upper end, and a flue gas outlet at its lower end, and a lower compartment having upper and lower regions, a second heat exchanger forming the said primary circuit and located in the lower region thereof with water inlet and outlet connections thereto, a plurality of baffles defining a tortuous path between the top and bottom of the upper region of the lower compartment, duct means communicating between the flue gas outlet of the upper compartment and a flue gas inlet to the lower compartment for conveying flue gases between the two compartments, a flue gas outlet conveying flue gases from the lower compartment to atmosphere, pipe means for conveying water from a water outlet at the bottom of the lower region of the lower compartment to an inlet to a water spray means at or near the top of the upper region of the lower compartment, so that in use, water cascades downwardly over and around the baffles and is in contact with flue gases following the tortuous path around the baffles, to comprise the said secondary circuit, and further pipe means for conveying water from an outlet of the second heat exchanger to an inlet of the first heat exchanger, so that in use the water flowing through the latter is warmed before it leaves the secondary heat exchange means to return to the boiler.

15. A central heating boiler in combination with secondary condensing heat exchange means as claimed in claim 14 when forming part of a heating system for a building.

16. A building when heated by a heating system operating as claimed in any of claims 1 to 13 to which heat is supplied from the combustion process by means of at least one of a plurality of different heat exchange processes, wherein air entering the building is heated, water which is supplied to radiator heat exchangers in the building is heated, cold water stored in the building is heated, and heat is gained from hot gaseous products of combustion by cooling them to a temperature below the dew point of water vapour therein before being exhausted to atmosphere, the heat thereby given up by the hot products of combustion and the latent heat of vaporisation of their water content also being employed to heat water and/or air employed in heating the building.

17. A heating system for a building in which a hydrocarbon fuel is burnt in a combustion chamber in a boiler to heat water for circulating through radiators in the building, which produces hot gaseous products of combustion, and in which heat is exchanged between those products of combustion and secondary water which is cooled below the dew point temperature of water vapour in the products of combustion by primary water diverted from water returning from the radiators to the boiler, to achieve condensation of the hot exhaust gas water vapour content, wherein the diverted primary water is itself cooled to below the said dew point temperature and in use serves to cool the secondary water, and before the diverted primary water returns to the boiler, heat is exchanged between it and the hot gaseous products of combustion as a first step in the cooling of the latter and to raise the temperature of the primary water before it is remixed with the water returning to the boiler from the radiators.

18. A heating system as claimed in claim 17 wherein the primary water is warmed to a temperature is close to or equal to the temperature of the water returning from the radiators.

19. A building and heating system therefor which comprises a water heating boiler which in use burns a hydrocarbon fuel in a combustion chamber and provides a source of hot water, pump means for circulating the hot water through radiators in the building, a secondary condensing heat exchange means which in use operates to recover heat from hot gaseous products of combustion passing from the boiler to a flue, and in which the building includes an inlet through which air enters the building in which a heat exchanger is located through which in use water which has been heated in the secondary heat exchange means is caused to flow thereby to transfer heat from the latter to air entering the building, to warm the latter.

20. A building and heating system as claimed in claim 19 wherein the secondary heat exchange means operates to lower the temperature of the flue gases below the dew point of water vapour therein thereby to gain the latent heat of evaporation of the water content of the products of combustion, so that this heat is also available to heat the air entering the building.

21. A building and heating system as claimed in claims 19 or 20 wherein the secondary condensing heat exchange means comprises two separate heat exchangers, a first in which the hot flue gases are cooled by water flowing therethrough to a temperature which is above the dew point temperature and a second through which the previously cooled flue gases pass and in which they are cooled to below the dew point temperature before escaping to atmosphere, and in which the second heat exchanger includes primary and secondary water circuits, water flowing around the secondary circuit in use being cooled by water flowing through the primary circuit, wherein the secondary circuit water is in contact with the flue gases to cool them below the dew point, and wherein water from the secondary circuit in use is caused to pass through the heat exchanger in the air inlet, to warm the incoming air and cool the secondary circuit water, before it returns to the secondary circuit, and further comprising diverting means whereby in use some of the water returning from the radiators in the building to the boiler, is diverted through at least one further heat exchanger to be cooled therein before being supplied to an inlet to the primary circuit.

22. A building and heating system as claimed in claim 21 wherein the said at least one further heat exchanger comprises a radiator located within a region of the building which is maintained at a temperature which is below the dew point temperature.

23. A building and heating system as claimed in claim 21 wherein the building includes a reservoir of cold water for supplying water to a heated water cylinder which is to supply hot water to taps in the building, and a further heat exchanger is provided associated with the cold water reservoir, through which the diverted water is caused to flow before it is supplied to the inlet to the said primary circuit.

24. A building and heating system as claimed in claim 23 wherein said further heat exchanger is a contra flow heat exchanger in which there are two water paths which are essentially parallel and in use the flow of water to be warmed along one path is opposite to the direction of the flow of water which is to do the warming and which flows along the other path.

25. A building and heating system as claimed in claim 24, wherein the contra flow heat exchanger is located within the reservoir and comprises concentric tubes defining a first water path through the inner tube and a second water path through the annular space between the two tubes, and a pump operates to pump water from the reservoir through the first path and the said diverted water is caused to flow through the second path, so that the diverted water is sandwiched between tube walls each having reservoir water on its opposite face.

26. A building and heating system as claimed in claim 21 wherein the diverted water is caused to flow first through a radiator as claimed in claim 22 and thereafter through a heat exchanger associated with a cold water reservoir as claimed in claim 23.

27. A building and heating system as claimed in any of claims 21 to 26 further comprising a secondary circuit pump which operates to pump secondary circuit water through the second heat exchanger and through the heat exchanger in the air inlet to the building, and further diverting means is provided by which in use some of the secondary circuit water is caused to circulate through the heat exchanger in the air inlet to the building before it returns to the secondary circuit, and the remainder of the water is simply circulated around the secondary circuit by the secondary circuit pump.

28. A building and heating system as claimed in any of claims 21 to 27 further comprising an overall control system which includes temperature sensors and/or flow sensors and electrically controlled valves, whereby in use the volume and/or rate of flow of any diverted water associated with the secondary or the primary circuits is controlled, and wherein diverted water flows through two or more heat exchange means and the control system is programmed to determine through which of the heat exchangers the water is to flow.
